# EUROPÄISCHE PATENTSCHRIFT

(11) **EP 2 546 846 B1**
(45) Veröffentlichungstag und Bekanntmachung des Hinweises auf die Patenterteilung: **10.04.2019**
(21) Anmeldenummer: 12005119.8
(22) Anmeldetag: 11.07.2012
(51) Int. Cl.: H01H 3/14

(54) **Schlauchverschluss**
Fermeture de tuyau
Hose closure

(30) Priorität: 13.07.2011 DE 202011050716 U
(43) Veröffentlichungstag der Anmeldung: 16.01.2013
(73) Patentinhaber: Gummi-Welz GmbH u. Co. KG Gummi-Kunststofftechnik-Schaumstoffe, 89231 Neu-Ulm (DE)
(72) Erfinder: Grein, Horst, 34637 Schrecksbach (DE); Fritsche, Wolfgang, 89134 Blaustein (DE); Braig, Jürgen, 89584 Ehingen (DE)
(74) Vertreter: Ter Meer Steinmeister & Partner

(56) Entgegenhaltungen:
- DE-A1- 2 156 396
- DE-A1- 2 747 157
- DE-A1- 4 126 594
- DE-B3-102008 010 074
- DE-C1- 19 632 592
- DE-U1- 20 013 310

## Beschreibung

Die Erfindung betrifft einen Schlauchverschluss, umfassend ein formgebendes Einsatzstück, das in das Schlauchende eingesetzt ist, und einen Elastomerkörper, der das Schlauchende verschließt.

Schläuche, die beispielsweise als Mantel für elektrische Schaltleisten eingesetzt werden, müssen an den Enden verschlossen werden. Häufig werden zur Abdichtung von Schläuchen Dichtstopfen eingesetzt. Im Fall der elektrischen Schaltleisten müssen elektrische Anschlüsse aus dem Schlauchinneren herausgeführt werden. Hierzu können Dichtstopfen mit einer Bohrung versehen sein. Alternativ werden kappenartige Endstücke auf den Schlauch geschoben und zusammengepresst (gecrimpt) oder festgeklebt. Hierdurch ergibt sich eine Vergrößerung der Schlauchabmessungen. Noch andere Maßnahmen bestehen darin, den Dichtstopfen außen mit Klebstoff zu versehen, so dass er nach dem Einziehen in das Schlauchinnere an der Wandung haftet. Der Hohlraum bis zum Schlauchende wird mit Dichtmasse gefüllt und ein Abschlussstück mit dem Schlauchende verklebt.

Aus der DE 10 2008 010 074 ist eine Schaltleiste bekannt, welche ein bei einer Krafteinleitung auf seine Außenseite elastisch nachgiebiges Hohlprofil mit einer sich über seine gesamte Länge erstreckende, elastisch komprimierbare Hohlkammer aufweist. Zudem weist der Gegenstand bei einer Kompression der Hohlkammer miteinander kontaktierbare Kontaktwandungen auf. Das Hohlprofil weist außerdem an wenigstens einem Ende der Schaltleiste in einem Bereich, der in Richtung der Krafteinleitung hinter der Hohlkammer mit den Kontaktwandungen liegt, eine verringerte Steifigkeit auf.

Gemäß der DE 200 13 310 U1 ist auf das Stirnende eines Kontaktinnenwandungen aufweisenden Schaltleistenschlauchs ein Kontaktierungsbauteil aufschiebbar, das mit einem flexiblen Mantelende ausgestattet ist. Ein formstabiles Plattenelement in Form eines Chipbauteils mit elektrisch leitfähiger Ober-und Unterseite ist mit einem Ende zentral in den Körper des Kontaktierungsbauteils eingesteckt und ist mit dem anderen Ende in den Schaltleistenschlauch eingeschoben. Ein Endwiderstand ist im Kontaktierungsbauteil untergebracht und ist über Anschlussdrähte elektrisch leitend mit dem Plattenelement verbunden. Auf das flexible Mantelende des Kontaktierungsbauteils ist ein Pressring aufgeschoben und zusammengepresst, wodurch eine Flächenpressung zu den Oberflächen des Plattenelements erzielt wird, die eine Fixierung des Kontaktierungsbauteils und elektrische Kontaktierung sicherstellen. Alternativ können am Kontaktierungsbauteil Spitzen oder Dorne vorgesehen sein, die in die elektrisch leitenden Kontaktwandungen eingesteckt werden. Zwischen der Schlauchaußenwandung und der Außenfläche des Kontaktierungsbauteils besteht ein Höhenunterschied, der die Einbaubedingungen mitbestimmt.

Aus der EP 0 383 671 A1 ist eine elektrische Schaltleiste bekannt, die in einem elektrisch isolierenden Rohrkörper zwei Leiter umfasst, die durch ein oder zwei Stege aus elektrisch isolierendem, weichem, elastischem Material von einander getrennt sind. Es ist ein Anschluss mit zwei Leitern gezeigt, die Zahnungen für eine Verankerung in den Leitern aufweisen. Mittels Schrumpfschlauch wird die Verbindung verschlossen.

In der DE 196 32 592 C1 ist eine Schaltleiste offenbart, die am Ende einen Konturkörper als Anschlussbauteil aufweist. Von diesem aus erstreckt sich ein nichtleitender Kontaktierungsfortsatz mit leitender Oberfläche und zwei Kontaktdornen, die bis zu den Litzen der elektrischen Leitungen reichen, ins Schlauchinnere. Die Montage des Konturkörpers erfolgt nach starkem Aufweiten des Stirnendes des Schlauchs. Werden die Aufweitmittel entfernt, schließt sich der Schlauch aufgrund seiner Eigenspannung um den Konturkörper und die Kontaktdorne stechen in die Kontaktwandungen des Schlauchs ein. Als weitere Maßnahme ist beschrieben, die Kontaktdorne definiert in die Kontaktwandungen einzudrücken.

Der Erfindung liegt die Aufgabe zugrunde, einen Schlauchverschluss zu schaffen, der für elektrische Schaltleisten verwendbar ist und bei der Herstellung ein einfaches Handhaben erlaubt.

Diese Aufgabe ist durch die Erfindung bei einem Schlauchverschluss mit den Merkmalen des Anspruchs 1 gelöst. Vorteilhafte Weiterbildungen des erfindungsgemäßen Schlauchverschlusses sind Gegenstand der Unteransprüche.

Ein Schlauchverschluss gemäß der Erfindung umfasst ein formgebendes Einsatzstück, das in das Schlauchende eingesetzt ist, und einen Elastomerkörper, der das Schlauchende verschließt. Der Schlauch sowie der Elastomerkörper sind aus Kautschuk, vorzugsweise EPDM. Der Elastomerkörper ist an die Stirnseite des Schlauchs anvulkanisiert und setzt diesen in Längsrichtung bündig fort. Das Einsatzstück ragt mit dem freien Ende über das Schlauchende hinaus und ist dort von dem Elastomerkörper umgeben, wobei das Einsatzstück in dem für das Schlauchinnere vorgesehenen Bereich an gegenüberliegenden Seiten-mindestens jeweils einen Stachelvorsprung aufweist, mit dem es in die Schlauchwandung sticht.

Das Einsatzstück, das sich mit einem Teil im Endbereich des Schlauchs befindet und mit dem anderen Teil vom Elastomerkörper umgeben ist, verleiht dieser Verbindung Stabilität und erleichtert die Anfügung des Elastomerkörpers an das Schlauchende, indem es eine Ausrichtung desselben auf einfache Weise ermöglicht. Die Anvulkanisation des Elastomerkörpers liefert eine durchgehende tangentiale Fortsetzung des Schlauchs ohne Dimensionsänderung (Vergrößerung der Abmessungen), wie sie ansonsten bei Aufstecken und Verpressen oder Aufschrumpfen bzw. Verkleben eines Elastomerteils entsteht. Das heißt, der Übergang von Schlauch und Elastomerkörper ist ohne jegliche Stufe oder Verdickung wie bei einem einzigen Teil. Durch die Stachelvorsprünge ist das Einsatzstück während der Montage und auch später fest gehaltert und das Schlauchende stabil geschlossen. Im Fall eines Schaltleistenschlauchs besteht eine formschlüssigc verbindung zwischen den leitenden Stachelvorsprüngen und den elektrisch leitenden Mantelbereichen des Schlauchs.

Sind am Einsatzstück Anschlussdrähte vorgesehen, ist für diese durch die stoffschlüssige Verbindung mit dem Elastomermaterial eine Zugentlastung gebildet. Ist am Einsatzstück ein Prüfwiderstand oder ein sonstiges Bauteil angebracht, stellt dieser zusätzlich einen Widerstand gegen Zug in Längsrichtung dar.

Dadurch, dass das Elastomermaterial und der Schlauchmantel heiß zusammenvulkanisiert werden, ergibt sich eine stoffschlüssige Verbindung, die besonders dicht und fest ist.

Eine Vorichtung zur Herstellung eines erfindungsgemäßen Schlauchverschlusses ist mit einem Hohlkörper versehen, der eine Aufnahme für das Schlauchende einschließlich des eingesetzten Einsatzstücks und einen Hohlraum für den zu bildenden Elastomerkörper umfasst. Im Hohlraum endet ein Einspritzkanal. Des Weiteren ist eine Spannvorrichtung vorgesehen, die das Schlauchende umschließt und druckbeaufschlagt. Eine Heizeinrichtung ist vorgesehen, die die Spannvorrichtung sowie den Hohlkörper im Bereich des entstehenden Elastomerkörpers erwärmt.

Bei einer vorteilhaften Ausführung der erfindungsgemäßen Vorrichtung ist die Spannvorrichtung mit dem Hohlkörper integriert.

Bei einer mehrteiligen, vorzugsweise zweiteiligen Ausführung der Vorrichtung braucht das Schlauchende lediglich in die Aufnahme eingelegt und dann der zweite Teil aufgesetzt werden. Aussparungen für die Kabeldurchführung sind zweckmäßig vorgesehen.

Die Spannvorrichtung ist vorzugsweise mit einer Profilierung versehen, um den Halteeingriff mit dem Schlauchende zu verstärken. Es kommt hierbei zu einer fixierend wirkenden Verformung des Schlauchmantels, die sich nach der Entnahme des mit dem Verschluss versehenen Schlauchs vollständig elastisch zurückbildet.

Die Abläufe bei der Herstellung des Schlauchverschlusses unter Verwendung der beschriebenen Vorrichtung sind wie folgt:
Das Einsatzstück wird in der vorgesehenen Länge in den Schlauch bis zu einer definierten Tiefe eingeschoben. Dieser kann ausreichend elastisch sein, um das Einschieben zu ermöglichen. Andernfalls kann der Mantel auch durch leichten seitlichen Druck aufgeweitet werden. Dadurch wird insbesondere im Fall von Stachelvorsprüngen die erforderliche Höhe freigegeben. Lediglich in Ausnahmefällen wird es erforderlich sein, zuvor das Schlauchende aufzuweiten.

Dann wird das Schlauchende mit dem teilweise vorstehenden Einsatzstück in eine Spritzform, d.h. die Aufnahme einer Einspritz-Vulkanisier-Vorrichtung, eingebracht. Die Aufnahme hat im inneren Bereich einen Hohlraum für den zu bildenden Elastomerkörper. Dort endet ein Einspritzkanal. Sofern mehrere Schlauchverschlüsse in einem Werkzeug parallel, d.h. gleichzeitig, gefertigt werden, sind entsprechend viele Hohlräume, Einspritzkanäle, etc. vorhanden. Die folgende Beschreibung bezieht sich auf eine Ausführung für die Herstellung eines einzigen Schlauchverschlusses mit entsprechend einem Hohlraum.

Das Schlauchende wird von der Spritzform umschlossen und dabei von einer Spannvorrichtung gehaltert und druckbeaufschlagt. Der Schlauch wird in der Regel zusammengedrückt, bis seine ursprüngliche Außenkontur wieder oder nahezu wieder erreicht ist. Das Einsatzstück ist dann unverrückbar fixiert. Im Fall von Stachelvorsprüngen werden diese beim Festspannen in den Schlauchmantel gepresst und verankern sich dort. Handelt es sich um den Schlauch einer Schaltleiste, dringen die Stachelvorsprünge in das elektrisch leitende Material ein, wobei eine leitende verbindung zwischen dem Einsatzstück und dem leitenden Teil des Schlauchmantels hergestellt wird.

Durch das Pressen des Einsatzstücks über das Schlauchende wird das Einsatzstück während der Herstellung des Schlauchverschlusses zentriert im Hohlraum gehalten.

Die Aufnahme wird im Bereich des zu bildenden Elastomerkörpers erwärmt. Der Stempel der Vorrichtung, d.h. die Spannvorrichtung, wird mit aufgeheizt, damit das Schlauchende eine genügend hohe Temperatur erreicht. Die Erwärmung ist jedoch nur örtlich und der Schlauch außerhalb des in die Vorrichtung eingebrachten Schlauchteils hat eine wesentlich niedrigere Temperatur als der aufgeheizte Bereich und kann daher auf einfache Weise gehandhabt werden.

Das Elastomermaterial wird in den Hohlraum eingespritzt und wird an den Stirnkanten des Schlauchs anvulkanisiert. Durch das Einsatzstück ergibt sich eine Stabilisierung des gebildeten Elastomerkörpers. Wenn der Einsatzkörper mit Stachelvorsprüngen versehen ist, verhindern die im Schlauchmantel verankerten Stachelvorsprünge ein Verrutschen des Einsatzstücks ins Schlauchinnere aufgrund des beim Spritzvorgang entstehenden Überdrucks. Beim Pressvorgang dringen die Stachelvorsprünge gewöhnlich nicht bis zu ihrem Fuß in den Schlauchmantel ein. In den so gebildeten Zwischenraum zwischen der Schlauchinnenfläche und dem Einsatzstück fließt während des Einspritzens Elastomermaterial und verbindet den Elastomerkörper dort ebenfalls mit dem Schlauchmantel. Durch die vergrößerte Anspritzfläche zusätzlich zu der Stirnseitenfläche wird der Zusammenhalt verbessert.

Die Erfindung wird im folgenden weiter anhand eines Ausführungsbeispiels und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1: eine Längsschnittansicht einer elektrischen Schaltleiste mit an beiden Enden gemäß der Erfindung ausgestattetem Schlauchverschluss,
- Fig. 2 und 3: Schnittansichten der Einsatzstücke der beiden Schlauchverschlüsse von Fig. 1 mit elektrischen Anschlussleitungen und Prüfwiderstand,
- Fig. 4: eine Querschnittansicht eines Schlauchendes mit Einsatzstück vor dem Einspritzen von Elastomermaterial,
- Fig. 5 und 6: schematische Schnittansichten einer EinspritzVulkanisier-Vorrichtung gemäß der Erfindung mit bereits fertiggestellten Schlauchverschlüssen gemäß Fig. 1 mit Anschlussleitungen bzw. Prüfwiderstand,
- Fig. 7: eine perspektivische Draufsicht des unteren Teils einer Einspritz-Vulkanisier-Vorrichtung mit vier Aufnahmen für vier Schlauchenden,
- Fig. 8: eine perspektivische Draufsicht des unteren Teils der Einspritz-Vulkanisier-Vorrichtung von Fig. 7 mit aufgesetztem Fixierblock,
- Fig. 9: eine perspektivische Draufsicht der Einspritz-Vulkanisier-Vorrichtung ähnlich Fig. 8 mit einer weiteren aufgelegten Platte und
- Fig. 10: eine perspektivische Gesamtansicht der Einspritz-Vulkanisier-Vorrichtung von Fig. 7 bis 9.

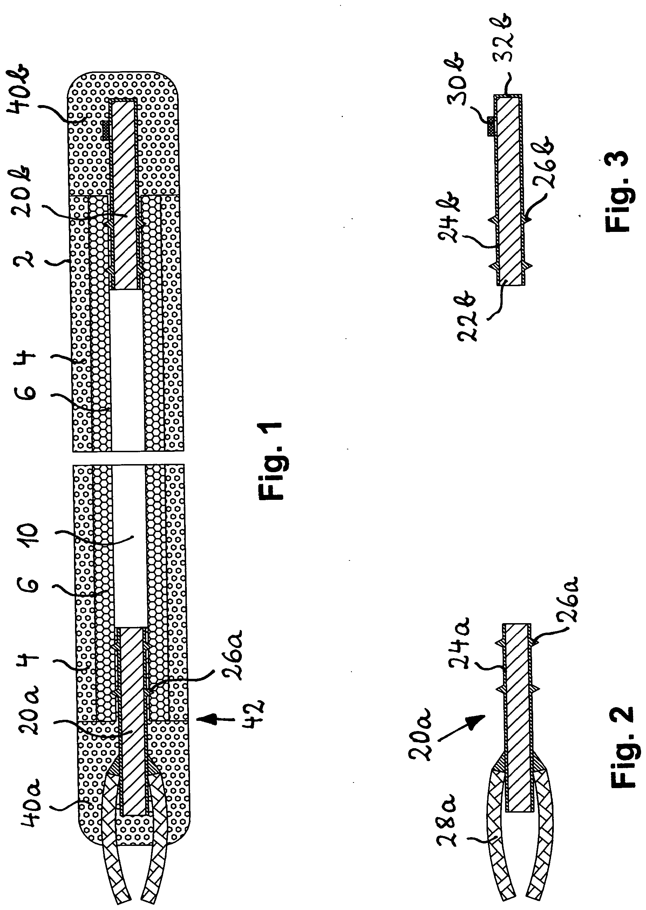

Im Folgenden werden der Aufbau und die Anordnung eines erfindungsgemäßen Schlauchverschlusses am Beispiel eines Schaltleistenschlauchs anhand von Fig. 1 bis 3 beschrieben.

Eine elektrische Schaltleiste in dem dargestellten Ausführungsbeispiel hat einen Schlauch 2, der aus mehreren Komponenten aufgebaut ist. Außen umfasst er einen Mantel 4 aus nicht leitendem Material (vorzugsweise EPDM - Ethylen-Propylen-DienKautschuk). An gegenüberliegenden Innenflächen ist der Mantel 4 mit einer Schicht 6 aus leitendem Material (vorzugsweise EPDM) versehen, in die vorzugsweise ein elektrischer Draht 8 einextrudiert ist. Im Übrigen umgrenzt der Schlauch 2 eine Hohlkammer 10. Am Ende ist in den Schlauch 2 jeweils ein formgebendes Einsatzstück 20 (20a, 20b) teilweise eingeschoben, das im Folgenden mehr im Einzelnen beschrieben wird.

Das gezeigte Einsatzstück 20a, 20b ist plattenförmig. Dies ist je nach Ausführungsbeispiel und Anwendungsfall nicht zwingend. Andere Gestaltungen sind möglich. Der Grundkörper 22a, 22b des Einsatzstücks 20a, 20b ist aus elektrisch nicht leitendem Material. An gegenüber liegenden Flächen - vorliegend oben und unten - ist die Oberfläche des Einsatzstücks 20a, 20b ganz oder teilweise mit einer Schicht 24a, 24b aus leitendem Material versehen. An dem in den Schlauch 2 ragenden Abschnitt des Einsatzstücks 20a, 20b erstrecken sich aus der Schicht 24a, 24b Stachelvorsprünge 26a, 26b in der Form von sich verjüngenden Stacheln (mit konischer oder Pyramidenform) oder Pins fort. Die Stachelvorsprünge 26a, 26b können z.B. auch aufgelötet sein. Pro Fläche ist mindestens ein Vorsprung vorgesehen. Ihre Gestalt könnte auch ein zylindrischer Stift oder ein Steg oder eine Rippe oder ein Körper anderer Gestalt sein, sofern der Körper in einer Spitze, einem Grat oder dergleichen endet. An dem sich außerhalb des Schlauchs 2 befindenden Abschnitt des Einsatzstücks 20a sind oben und unten Anschlussdrähte 28a angelötet und bedarfsweise Aufbauten vorhanden. Der sich außerhalb des Schlauchs 2 befindende Abschnitt des Einsatzstücks 20b ist mit einem Prüfwiderstand 30b oder anderen Aufbauten versehen und die Schichten 24b sind an der Stirnkante 32b miteinander verbunden. Alternativ können die Schichten 24b auch durch ein Loch im Einsatzstück verbunden sein.

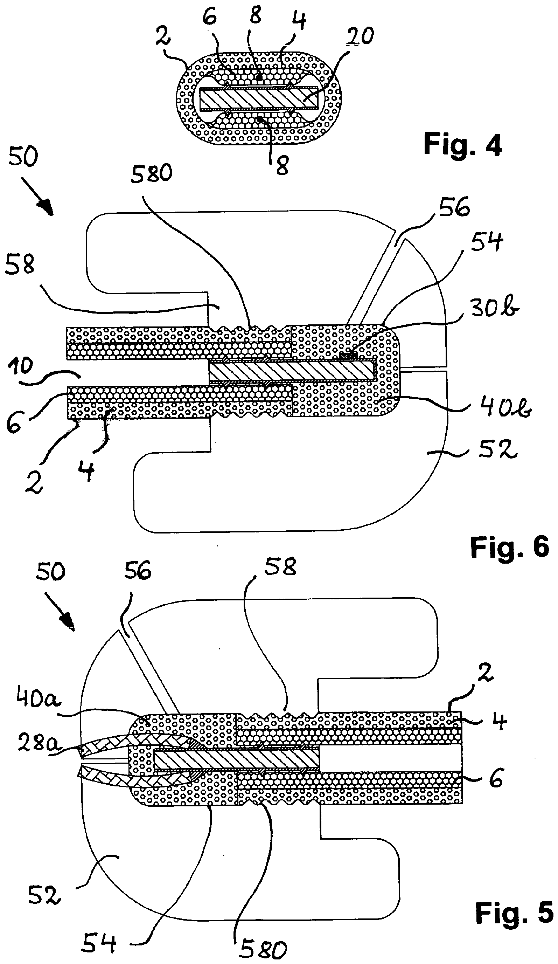

Die Dimensionierung des Einsatzstücks 20 und der Hohlkammer 10 beim dargestellten Ausführungsbeispiel ist derart, dass die Hohlkammer 10 das Einsatzstück 20 beim Einschieben aufnimmt und dieses danach mit der Ober- und Unterseite zwischen den leitenden Schichten 6 mehr oder weniger eng an diesen anliegend ruht, wie in Fig. 4 gezeigt ist. Die Stacheln 26 (26a, 26b) sind in die leitenden Schichten 6 eingedrückt und stellen einen elektrischen Kontakt mit diesen sicher, wobei sie außerdem das Einsatzstück im Schlauch 2 verankern.

An die Stirnseite des Schlauchs 2 schließt sich jeweils fluchtend ein kappenartiger Elastomerkörper 40 (40a, 40b) aus vorzugsweise EPDM an. Der Elastomerkörper 40 ist durch Anspritzen hergestellt worden und durch Vulkanisation mit dem Schlauch an dessen Stirnfläche verbunden worden, wie durch den Pfeil 42 veranschaulicht ist. Durch den Elastomerkörper 40a erstrecken sich die Anschlussdrähte 28a nach außen. Bei Verwendung von vorzugsweise EPDM-isolierten Anschlussdrähten wird die Isolierung der Anschlussdrähte mit dem Elastomerkörper vulkanisiert. Durch ihre Einbettung in das Elastomermaterial sind sie gegen Zug gesichert und abgedichtet. Der Widerstand 30b, der in den Elastomerkörper 40b eingebettet ist, stellt eine zusätzliche Verankerung des Einsatzstücks 22b dar. Dies ist auch der Fall für zusätzliche Aufbauten auf dem Einsatzstück.

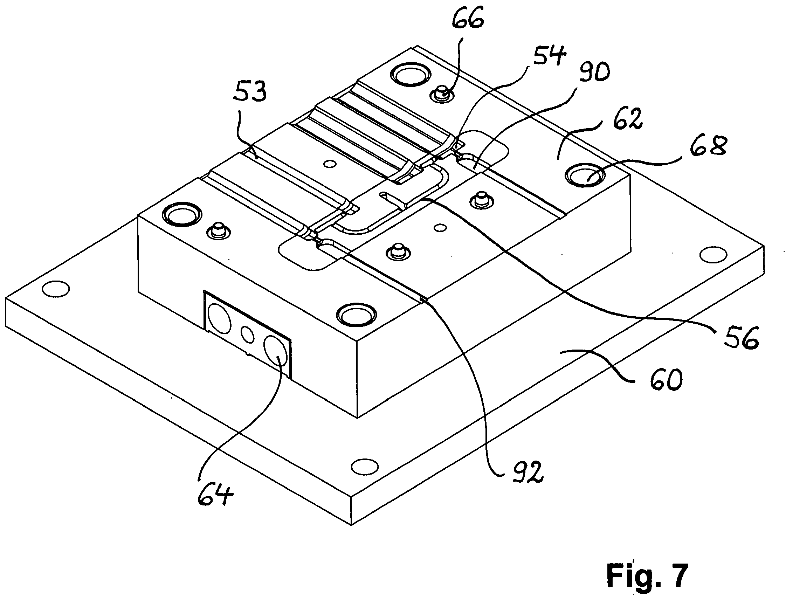

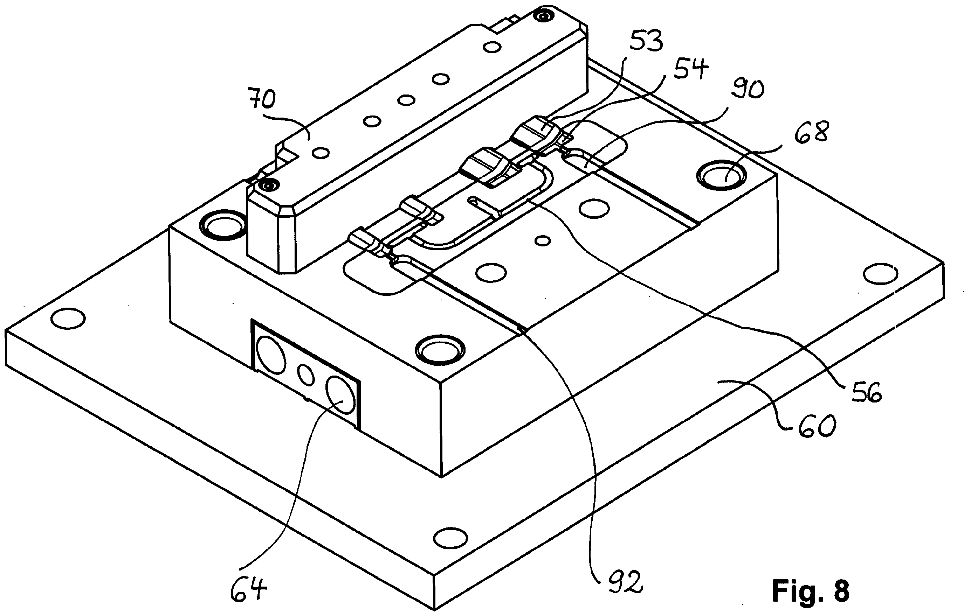

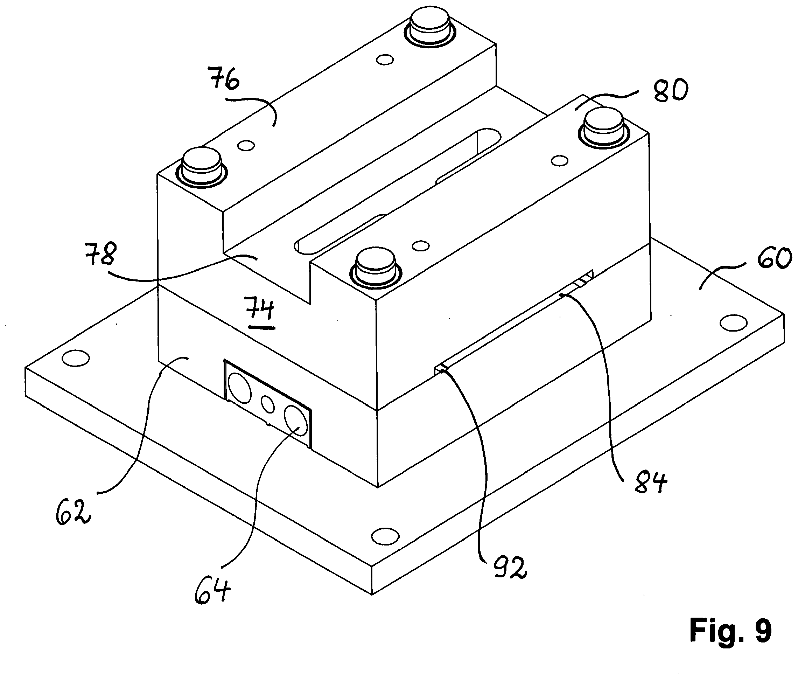

Fig. 5 und 6 veranschaulichen den Aufbau einer Einspritz-Vulkanisier-Vorrichtung (Werkzeug) 50 zur Herstellung von Schlauchverschlüssen wie gezeigt. Die Ansichten entsprechen dem Zustand nach der Herstellungsprozedur und vor Entnahme der fertigen Teile. Das Werkzeug 50 umfasst einen Hohlkörper 52 mit einer Aufnahme 53 für das Schlauchende einschließlich Einsatzstück (siehe Fig. 7) und einem Hohlraum 54 für den zu bildenden Elastomerkörper 40a. In den Hohlraum 54 mündet ein Einspritzkanal 56. Eine Spannvorrichtung 58, von der zwei Stempel gezeigt sind, ist in das Werkzeug 50 integriert und druckbeaufschlagt das Ende des Schlauchs 2. Die Arbeitsflächen der Stempel 58 weisen eine Profilierung 580 zur Verbesserung des Halteeingriffs der Spannvorrichtung 58 auf. Mittels der Profilierung 580 wird eine formgebende Klemmung des Schlauchendes während des Produktionsprozesses ermöglicht. Nach dem Lösen der Spannvorrichtung formt sich der Mantel 4 des Schlauchs an den Klemmstellen wieder zurück. Für die Anschlussdrähte 28a der Einsatzstücke 20a sind Durchführungen 92 und Aussparungen 84, 90 vorgesehen, siehe Fig. 7 bis 10.

Die Arbeitsschritte zur Herstellung eines Schlauchverschlusses gemäß der Erfindung sind wie folgt:
- Einschieben eines Teils des Einsatzstücks in das Schlauchende,
- Einführen des Schlauchendes in einen Hohlkörper einer Einspritz-Vulkanisier-Vorrichtung,
- Pressen des mit dem Einsatzstück versehenen Schlauchendes, vorzugsweise, bis die Schlauchaußenkontur wieder oder nahezu wieder erreicht wird, und vorzugsweise formgebend,
- Erwärmen des Schlauchendes und des Hohlkörpers im Bereich des zu bildenden Elastomerkörpers,
- Einspritzen von Elastomermaterial in den Hohlkörper und
- Anvulkanisation an das Schlauchende.

Fig. 7 bis 10 veranschaulichen den Aufbau eines Beispiels eines solchen mehrteiligen Werkzeugs 50 mehr im Einzelnen, das die gleichzeitige Herstellung von vier Schlauchverschlüssen ermöglicht. Auf einer Grundplatte 60 sitzt ein Block 62, in dem sich Aufnahmen 53, Hohlräume 54 und Einspritzkanäle 56 befinden. Das Ausführungsbeispiel des Werkzeugs 50 ist für die Herstellung von vier Verschlüsssen (je zwei mit Einsatzstücken 20a, 20b) vorgesehen. Bei den zwei äußeren Stationen befinden sich Aufnahmen 53 und Durchführungen 92 für die Anschlussdrähte 28a. Zu- und Ableitungskanäle (Heizkanäle) 64 sind ausgespart. Blöcke und Bolzen 66 sowie Bohrungen 68 sind zur Halterung und Führung von darauf liegenden Platten vorgesehen.

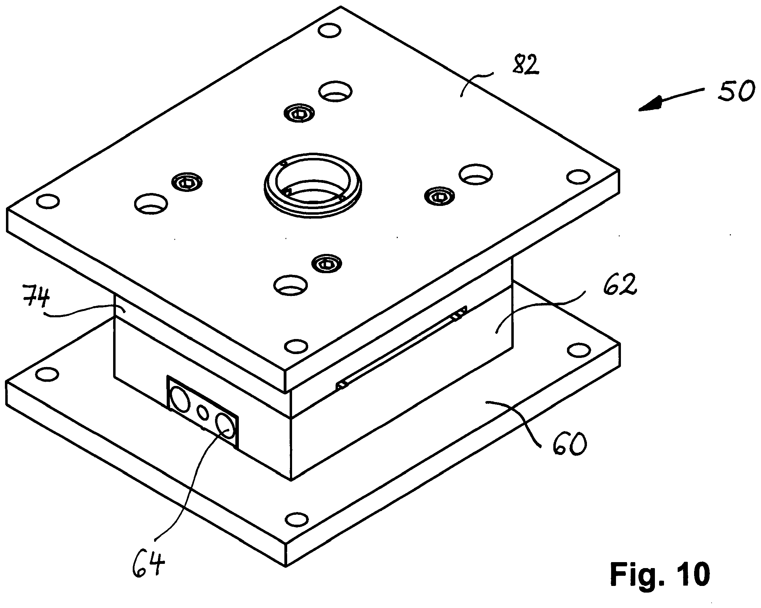

Quer über die Aufnahmen 53 erstreckt sich ein Fixierblock 70, der mehrteilig sein kann. Hierauf ist eine die Spannvorrichtung umfassende Platte 74 aufgesetzt, die zwei äußere Bereiche 76, 80 mit größerer Höhe und einen mittleren Bereich 78 mit geringerer Höhe aufweist. Der Bereich 76 überdeckt den Block 70. Der Bereich 78 überdeckt und definiert die Hohlräume 54. Fig. 10 zeigt eine Gesamtansicht des Werkzeugs 50 mit der Deckplatte 82.

## Patentansprüche

1. Schlauchverschluss, umfassend ein formgebendes Einsatzstück (20), das in das Schlauchende eingesetzt ist, und einen Elastomerkörper (40), der das Schlauchende verschließt,
**dadurch gekennzeichnet, dass** der Schlauch (2) aus Kautschuk ist,
der Elastomerkörper (40) aus Kautschuk ist, an den Schlauch anvulkanisiert ist und diesen in Längsrichtung bündig fortsetzt und
das Einsatzstück (20) mit dem freien Ende über das Schlauchende hinausragt und dort von dem Elastomerkörper (40) umgeben ist, wobei das Einsatzstück (20) in dem für das Schlauchinnere vorgesehenen Bereich an gegenüberliegenden Seiten mindestens jeweils einen Stachelvorsprung (26) aufweist, mit dem es in die Schlauchwandung sticht.

2. Schlauchverschluss nach Anspruch 1, **dadurch gekennzeichnet, dass** das Einsatzstück (20a, 20b) mit Aufbauten (30b) versehen ist.

3. Schlauchverschluss nach Anspruch 1 oder 2 für eine elektrische Schaltleiste mit elektrisch leitender Schlauchinnenschicht, **dadurch gekennzeichnet, dass** das Einsatzstück (20a) aus nicht leitendem Material ist, zwei voneinander elektrisch isolierte Außenflächen (24a) mit jeweils mindestens einem elektrisch leitenden Stachelvorsprung (26a) sowie zwei mit diesem verbundene elektrische Anschlussleitungen (28a) aufweist.

4. Schlauchverschluss nach Anspruch 1 oder 2 für eine elektrische Schaltleiste mit elektrisch leitender Schlauchinnenschicht, **dadurch gekennzeichnet, dass** das Einsatzstück (20b) aus nicht leitendem Material ist, zwei voneinander elektrisch isolierte Außenflächen (24b) mit jeweils mindestens einem elektrisch leitenden Stachelvorsprung (26b) und einen Prüfwiderstand (30b) sowie eine Verbindung der Außenflächen (32b) aufweist.

5. Schlauchverschluss nach einem der Ansprüche 1 bis 4, **dadurch gekennzeichnet, dass** die Stachelvorsprünge (26) sich von dem Einsatzstück (20) aus nach außen verjüngen.

6. Schlauchverschluss nach einem der Ansprüche 1 bis 5, **dadurch gekennzeichnet, dass** die Eingriffsenden der Stachelvorsprünge (26) als Spitzen oder Kanten ausgeführt sind.

7. Einspritz-Vulkanisier-Vorrichtung zur Herstellung eines Schlauchverschlusses nach einem der Ansprüche 1 bis 6, **dadurch gekennzeichnet, dass**
ein Hohlkörper (50) eine Aufnahme für das Schlauchende einschließlich des eingesetzten Einsatzstücks mit einem Hohlraum (54) für den zu bildenden Elastomerkörper (40) umfasst,
ein Einspritzkanal (56) im Hohlraum endet,
eine Spannvorrichtung (58) vorgesehen ist, die das Schlauchende umschließt und druckbeaufschlagt, und
eine Heizeinrichtung vorgesehen ist, die die Spannvorrichtung (58) sowie den Hohlkörper (50) im Bereich des entstehenden Elastomerkörpers (40) erwärmt.

8. Vorrichtung nach Anspruch 7, **dadurch gekennzeichnet, dass** die Spannvorrichtung (58) mit dem Hohlkörper (50) integriert ist.

9. Vorrichtung nach Anspruch 7 oder 8, **dadurch gekennzeichnet, dass** die Spannvorrichtung (58) mehrteilig, vorzugsweise zweiteilig, ist.

10. Vorrichtung nach einem der Ansprüche 7 bis 9, **dadurch gekennzeichnet, dass** die Spannvorrichtung (58) mit einer Profilierung (580) versehen ist.

11. Vorrichtung nach einem der Ansprüche 7 bis 10, **dadurch gekennzeichnet, dass** eine oder mehrere Aussparungen (84) für die Kabeldurchführung vorgesehen sind.

12. Verfahren zur Herstellung des Verschlusses eines Schlauchs mit einem formgebenden Einsatzstück, insbesondere für elektrische Schaltleisten, insbesondere nach einem der Ansprüche 1 bis 6, umfassend die folgenden Schritte:
Einschieben eines Teils des Einsatzstücks in das Schlauchende,
Einführen des Schlauchendes in einen Hohlkörper einer Einspritz-Vulkanisier-Vorrichtung,
Pressen des mit dem Einsatzstück versehenen Schlauchendes,
Erwärmen des Schlauchendes und des Hohlkörpers im Bereich des zu bildenden Elastomerkörpers,
Einspritzen von Elastomermaterial in den Hohlkörper und
Anvulkanisation an das Schlauchende.

13. Verfahren nach Anspruch 12, bei dem ein Einsatzstück mit Stachelvorsprüngen verwendet wird, **dadurch gekennzeichnet, dass** das Schlauchende nach dem Einschieben des Einsatzstücks gepresst wird, bis die Ausgangskontur des Schlauchs erreicht oder nahezu erreicht wird.

## Claims

1. A hose closure, comprising a shaping insert piece (20) which is inserted into the hose end, and an elastomer body (40), which seals the hose end,
**characterized in that**
the hose (2) is made of rubber,
the elastomer body (40) is made of rubber, is vulcanized to the hose and drives this forward in the longitudinal direction in a flush manner.
the insert piece (20) with the free end protrudes over the hose end and is surrounded there by the elastomer body (40), wherein the insert piece (20) comprises at least one barb projection (26) respectively in the region designated for the hose interior opposite sides, by means of which it jabs into the hose wall.

2. The hose closure according to claim 1, **characterized in that** the insert piece (20a, 20b) is provided with superstructures (30b).

3. The hose closure according to claim 1 or 2 for an electrical switch rail with an electrically conductive hose inner layer, **characterized in that** the insert piece (20a) is made of non-conductive material and comprises two outer surfaces (24a) that are electrically insulated from one another, each with at least one electrically conductive barb projection (26a), as well as two connecting lines (28a) electrically connected to this.

4. The hose closure according to claim 1 or 2 for an electrical switching rail with an electrically conductive hose inner layer, **characterized in that** the insert piece (20b) is made of non-conductive material and comprises two outer surfaces (24b) each with at least one electrically conductive barb projection (26b) and a test resistor (30b) as well as a connection of the outer surfaces (32b).

5. The hose closure according to one of claims 1 to 4, **characterized in that** the barb projections (26) are tapered from the insert piece (20) towards the outside.

6. The hose closure according to one of claims 1 to 5, **characterized in that** the engaging ends of the barb projections (26) are designed as pointed tips or edges.

7. An injection vulcanizing apparatus for producing a hose closure according to one of claims 1 to 6, **characterized in that**
a hollow body (50) comprises a holder for the hose end including the inserted insert piece with a cavity (54) for the elastomer body (40) to be formed,
an injection gate (56) ends in the cavity,
a clamping device (58) is provided, which encloses and impinges the hose end with pressure, and
a heating device is provided, which heats the clamping device (58), as well as the hollow body (50) in the region of the resulting elastomer body (40).

8. An apparatus according to claim 7, **characterized in that** the clamping device (58) is integrated with the hollow body (50).

9. The apparatus according to claim 7 or 8, **characterized in that** the clamping device (58) is composed of multiple parts, preferably being composed of two parts.

10. The apparatus according to one of claims 7 to 9, **characterized in that** the clamping device (58) is provided with a profiling (580).

11. The apparatus according to one of claims 7 to 10, **characterized in that** one or a plurality of recesses (84) are provided for the cable duct.

12. A method for producing the closure of a hose with a shaping insert piece, in particular, for electrical switching rails, in particular, according to one of claims 1 to 6, comprising the following steps:
insertion of a part of the insert piece into the hose end,
insertion of the hose end into a hollow body of an injection vulcanizing apparatus,
pressing of the hose end provided with the insert piece,
heating of the hose end and of the hollow body in the region of the elastomer body to be formed,
injection of elastomer material into the hollow body and vulcanization to the hose end.

13. The method according to claim 12 where an insert piece is used with barb projections, **characterized in that** the hose end is pressed after inserting the insert piece until the initial contour of the hose is achieved or is nearly achieved.

## Revendications

1. Obturateur de tuyau comprenant un insert de mise en forme (20) inséré dans l'extrémité du tuyau, et un corps en élastomère (40) obturant l'extrémité du tuyau,
**caractérisé en ce que**
le tuyau (2) est en caoutchouc,
le corps en élastomère (40) est en caoutchouc qui est vulcanisé sur le tuyau et qui prolonge celui-ci en affleurement dans la direction longitudinale, et
l'insert (20) fait saillie avec son extrémité libre au-delà de l'extrémité du tuyau et est ici entouré par le corps en élastomère (40), l'insert (20) présentant, dans la zone prévue pour l'intérieur du tuyau, au moins une saillie en picot respective (26) sur des côtés opposés, picot au moyen duquel il perce la paroi du tuyau.

2. Obturateur de tuyau selon la revendication 1,
**caractérisé en ce que**
l'insert (20a, 20b) est pourvu de superstructures (30b).

3. Obturateur de tuyau selon la revendication 1 ou 2 destiné à une barrette de commutation électrique pourvue d'une couche tubulaire interne électriquement conductrice,
**caractérisé en ce que**
l'insert (20a) est en un matériau non conducteur et comprend deux surfaces extérieures (24a) électriquement isolées l'une de l'autre ayant chacune au moins une saillie en picot (26a) électriquement conductrice et deux lignes de connexion électriques (28a) connectées à celle-ci.

4. Obturateur de tuyau selon la revendication 1 ou 2 destiné à une barrette de commutation électrique pourvue d'une couche tubulaire interne électriquement conductrice,
**caractérisé en ce que**
l'insert (20b) est en un matériau non conducteur et comprend deux surfaces extérieures (24b) électriquement isolées l'une de l'autre ayant chacune au moins une saillie en picot (26b) électriquement conductrice, et une résistance de contrôle (30b) ainsi qu'une liaison des surfaces extérieures (32b).

5. Obturateur de tuyau selon l'une des revendications 1 à 4,
**caractérisé en ce que**
les saillies en picot (26) vont en se rétrécissant depuis l'insert (20) vers l'extérieur.

6. Obturateur de tuyau selon l'une des revendications 1 à 5,
**caractérisé en ce que**
les extrémités d'engagement des saillies en picot (26) sont réalisées sous forme de pointes ou d'arêtes.

7. Dispositif d'injection et de vulcanisation pour réaliser un obturateur de tuyau selon l'une des revendications 1 à 6,
**caractérisé en ce que**
un corps creux (50) présente un logement pour l'extrémité du tuyau, y compris l'insert inséré, qui est pourvu d'un creux (54) pour le corps élastomère (40) à former,
un canal d'injection (56) se termine dans le creux,
il est prévu un dispositif de serrage (58) qui entoure l'extrémité du tuyau et la sollicite en pression, et
il est prévu un dispositif de chauffage qui chauffe le dispositif de serrage (58) ainsi que le corps creux (50) dans la zone du corps élastomère (40) en en cours de formation.

8. Dispositif selon la revendication 7,
**caractérisé en ce que**
le dispositif de serrage (58) est intégré avec le corps creux (50).

9. Dispositif selon la revendication 7 ou 8,
**caractérisé en ce que**
le dispositif de serrage (58) est en plusieurs pièces, en particulier en deux pièces.

10. Dispositif selon l'une des revendications 7 à 9,
**caractérisé en ce que**
le dispositif de serrage (58) est pourvu d'un profilage (580).

11. Dispositif selon l'une des revendications 7 à 10,
**caractérisé en ce que**
il est prévu une ou plusieurs échancrures (84) pour le passage de câbles.

12. Procédé de réalisation d'un obturateur d'un tuyau comprenant un insert de mise en forme, en particulier pour des barrettes de commutation électriques, en particulier selon l'une des revendications 1 à 6, comprenant les étapes suivantes consistant à :
insérer une partie de l'insert dans l'extrémité du tuyau,
introduire l'extrémité du tuyau dans un corps creux d'un dispositif d'injection et de vulcanisation,
presser l'extrémité de tuyau pourvue de l'insert,
chauffer l'extrémité de tuyau et le corps creux dans la zone du corps élastomère à former,
injecter un matériau élastomère dans le corps creux et le vulcaniser à l'extrémité du tuyau.

13. Procédé selon la revendication 12, dans lequel on utilise un insert pourvu de saillies en picot,
**caractérisé en ce que**
après insertion de l'insert, l'extrémité du tuyau est pressée jusqu'à ce que le contour de départ du tuyau soit atteint ou approximativement atteint.
